# EUROPÄISCHE PATENTANMELDUNG

(11) **EP 1 808 879 A1**
(43) Veröffentlichungstag der Anmeldung: **18.07.2007**
(21) Anmeldenummer: 05028137.7
(22) Anmeldetag: 22.12.2005
(51) Int. Cl.: H01H 9/16, H01H 71/04

(54) **System zur kontaktlosen Zustandserkennung**

(71) Anmelder: SIEMENS AKTIENGESELLSCHAFT, 80333 München (DE)
(72) Erfinder: Beyer, Ralf, 07749 Jena (DE)

(57) **Zusammenfassung**

Die Erfindung betrifft ein System zur kontaktlosen Zustandserkennung mit mindestens zwei Zuständen und Erkennungsmitteln und Mitteln zur Abschirmung, wobei die Mittel zur Abschirmung zur Unterbrechung und Wiederherstellung einer Datenübertragung von einem Koppelelement zu einem Lesegerät vorgesehen sind. Damit soll erreicht werden, dass eine sichere und kosteneffiziente Zustandserkennung des Systems bewerkstelligt werden kann. Das erfindungsgemäße System ist zumindest teilweise als Schaltungsanordnung, Sicherheitssystem, Positionsschalter, Scharnierschalter oder als Alarmanlage ausführbar.

## Beschreibung

Die Erfindung betrifft ein System zur kontaktlosen Zustandserkennung mit mindestens zwei Zuständen und Erkennungsmitteln, wobei die Erkennungsmittel mindestens ein Lesegerät und mindestens ein Koppelelement aufweisen, die zur kontaktlosen Datenübertragung über eine Übertragungsfrequenz vorgesehen sind. Des Weiteren betrifft die Erfindung ein entsprechendes Verfahren.

Ein derartiges System bzw. Verfahren kommt in privaten als auch in industriellen Bereichen zum Einsatz. Das System ist überall dort von Relevanz, wo es gilt Zustände von beispielsweise Geräten, Schaltern, zu betätigenden Elementen, insbesondere Türen, Klappen oder jedes andere Element, welches mindestens zwei unterschiedliche Zustände aufweist, zu erfassen

Im privaten Bereich finden sich Anwendungen, beispielsweise im häuslichen Bereich in Alarmanlagen, Sicherungs- oder Schaltkästen, Überwachungssystemen oder Systemen zur Bestandsüberwachung.

Im industriellen Bereich finden sich Anwendungen auf den Gebieten der Schalttechnik, Automatisierungstechnik, Überwachungstechnik und auf dem Gebiet der Trackingsysteme.

Ein entscheidender Vorteil der kontaktlosen Erfassungstechnik ist deren Flexibilität bezüglich deren Verwendung. Es kann im Allgemeinen auf eine komplizierte Verkabelung oder mechanische Kontakte bzw. auf störungsanfällige Kontaktflächen verzichtet werden. Dies reduziert den Materialaufwand und erleichtert den Einsatz insbesondere in Umgebungen, die beim Einsatz von Kabeln gewisse Gefahrenpotentiale, unnötige Aufwendungen oder Behinderungen beinhalten. Des Weiteren macht die Mobilität, die dadurch entsteht, dass keine Kabelverbindungen zusätzlich hergestellt werden müssen, das System breit einsetzbar. Der Einsatzort der Geräte oder Elemente, deren Zustand überwacht bzw. erfasst werden soll, ist somit nicht festgelegt und kann in kürzester Zeit geändert werden.

Des Weiteren ist bei kontaktlosen Zustandserkennungssystemen eine nachträgliche Aufrüstung vorhandener Geräte und Elementen einträglich und ohne großen Aufwand möglich. Hierbei kann die Erfassung durch ein Lesegerät erfolgen, welches zentral angebracht ist, um mehrere Einheiten zu überwachen.

Beispielsweise ist es bei Automatisierungsanlagen erforderlich, Schaltzustände von Schaltern, wie z. B. Schutzschaltern (Leistungsschutzschalter, Motorschutzschalter, etc.) elektronisch zu erfassen. Eine Verkabelung dieser Schutzschalter ist in der Regel sehr aufwendig. Die Problematik der Verkabelung steigt mit der Komplexität der Automatisierungsanlage, bzw. deren Komponenten. Eine kontaktlose Zustandserkennung ist bei Automatisierungsanlagen eindeutig von Vorteil. Zudem hat es sich durchgesetzt, einen Schutzschalter mechanisch mit einem Hilfsschalter zu verbinden, um sicherzustellen, dass der Schaltzustand indirekt über den Hilfsschalter erfassbar ist. Der Hilfsschalter dient somit lediglich der Erfassung des Schaltzustandes. Der Hilfsschalter wird in der Regel über eine Ein-/Ausgabestation drähtig verbunden. Der Schaltzustand wird meist mittels eines Feldbusses an eine Steuerung übertragen und dort weiterverarbeitet. Der Hilfsschalter wird demzufolge überall dort eingesetzt, wo der eigentliche Schutzschalter keine Verbindungsmöglichkeit zur Steuerung/Überwachung hat, bzw. nicht dahingehend nachrüstbar ist. Der Hilfsschalter hat folglich die Funktion, die Inkompatibilität des Schutzschalters bezüglich eines Anschlusses an den Feldbus zu kompensieren.

Die derzeitige Hilfsschalterlösung weist verschiedene Nachteile auf:
Jeder Hilfsschalter muss mit einer Ein-/Ausgabestation und einer Stromversorgung verdrahtet werden. Zusätzlich werden Eingänge der Ein-/Ausgabestationen überhaupt erst benötigt. Durch die Verkabelung und den Einsatz von Ein-/Ausgabestationen ergeben sich voluminöse Schaltschränke. Der umständliche Geräte- und Verkabelungsaufwand ist somit hoch und kostenintensiv.

Zusätzlich ist die Erkennung der Schaltzustände abhängig von der Zuverlässigkeit der mechanischen und elektrischen Anordnung. Zunächst ist die mechanische Anbringung eines Hilfsschalters an einen Schutzschalter erkennungsrelevant. Die mechanische Verbindung birgt jedoch potentielle Risiken einer Nichterkennung. Durch den zusätzlichen Verkabelungsaufwand entsteht ebenfalls ein gewisses Gefahrenpotential hinsichtlich einer Nichterkennung, wenn beispielsweise Kontakte nicht ordnungsgemäß eingerichtet sind, oder eines der zur Erkennung vorgesehenen Geräte fehlerhaft ist. Insbesondere bei Automatisierungsanlagen ist die Zuverlässigkeit der Zustandserfassung substantiell wichtig. Eine Nichterkennung kann zur Gefährdung von Personal oder zu einem Produktionsausfall führen.

Ein weiterer Lösungsansatz für eine Zustandserkennung besteht in dem Einsatz von Kameras, allerdings ist der Aufwand bei dieser Lösung ebenfalls hoch, da hier ebenfalls potentiell fehlerbehaftete Erkennungsmittel, insbesondere elektronische Erkennungsmittel verwendet werden. Zudem muss ein Bilderkennungsverfahren eingesetzt werden, das den Aufwand zusätzlich unverhältnismäßig erhöht.

Aus DE 199 33 686 A1 ist ein Schalter mit drahtloser Fernablesung bekannt. Eine Zentraleinheit sendet Abfragesignale aus, die durch einen oder mehrere Schalter unterschiedlich codiert reflektiert oder gar nicht reflektiert werden. Anhand dieser reflektiertern Signale bestimmt die Zentraleinheit die Schalterzustände der Schalter.

Der Erfindung liegt die Aufgabe zugrunde ein breit verwendbares, kostensparendes System zur kontaktlosen Zustandserkennung anzugeben.

Diese Aufgabe wird bei einem System der eingangs genannten Art dadurch gelöst, dass das System Mittel zur Abschirmung aufweist, wobei die Mittel zur Abschirmung zur Unterbrechung und Wiederherstellung einer Datenübertragung vom Koppelelement zum Lesegerät vorgesehen sind. Die Aufgabe wird des Weiteren von einem entsprechenden Verfahren gelöst.

Erfindungsgemäß weist das System zur kontaktlosen Zustanderkennung mindestens zwei Zustände auf. Zusätzlich weist es Erkennungsmittel auf, wobei die Erkennungsmittel zur Erkennung mittels einer kontaktlosen Datenübertragung über eine Übertragungsfrequenz vorgesehen sind. Die kontaktlose Datenübertragung findet zwischen mindestens einem Lesegerät und mindestens einem Koppelelement statt. Beispielsweise stellen das Koppelelement und ein Datenspeicher Bestandteile eines Radiofrequenzidentifikators (RFID) dar. Neben dem Koppelelement stellt des Weiteren das Lesegerät ein Erkennungsmittel des Systems zur kontaktlosen Zustanderkennung dar. Hierbei fungiert das Lesegerät als Empfänger und das Koppelelement als das Daten sendende Element. Erfindungsgemäß weist das System Mittel zur Abschirmung auf. Die Mittel zur Abschirmung sind zur Unterbrechung und Wiederherstellung der Datenübertragung vom Koppelelement zum Lesegerät vorgesehen. Die Abschirmung bezieht sich hierbei auf die Abschirmung der zur kontaktlosen Datenübertragung notwendigen Radiowellen.

Durch den Verzicht auf mechanische Teile und elektronische Geräte zur Zustandserfassung ergibt sich eine hohe Erfassungszuverlässigkeit des Systems. Des Weiteren wird der Aufwand für die Herstellung eines erfindungsgemäßen Systems reduziert.

Vorteilhafterweise ist das System derartig ausführbar, dass Lesegerät und/oder das Koppelelement zur Abschirmung vorgesehen sind. Bei der Abschirmung des Lesegerätes wird das Aussenden eines Abfragesignals verhindert. Bei einer ebenfalls möglichen Abschirmung des Koppelelementes soll der Empfang eines solchen Abfragesignals verhindert werden. Die Verwendung der einen oder der anderen Abschirmung ist im Bezug auf die jeweilige Verwendung von Vorteil. Wenn beispielsweise mehrere Schalter mit Koppelelementen überwacht werden sollen, ist es sinnvoll, die Abschirmung am Koppelelement vorzusehen. Somit können mehrere Schaltzustände unterschieden werden. Umgekehrt kann es sinnvoll sein, das Lesegerät abzuschirmen, falls beispielsweise die Koppelelemente nur temporär in den Auslesebereich des Lesegerätes geraten, und das Lesegerät die gegebenenfalls erreichbaren Koppelelemente nicht auslesen soll.

Eine vorteilhafte Ausführungsform ist gegeben, wenn mittels der Anwendung mindestens eines Mittels zur Abschirmung ein Zustand des Systems anzeigbar ist. Durch die Verwendung mindestens eines Mittels zur Abschirmung kann in effektiver Weise auf das jeweilige Gerät oder Element Rücksicht genommen werden. In Abhängigkeit davon ist auch festzulegen, ob ein Mittel zur Abschirmung oder mehrere Mittel zur Abschirmung für eine effektive Abschirmung notwendig sind. Beispielsweise ist es sinnvoll, bei der Zustandserkennung eines Schalters das Mittel zur Abschirmung, welches zur Anwendung kommt, mit dem Betätiger formschlüssig oder einstückig zu kombinieren.

Eine vorteilhafte Ausführungsform koppelt die Mittel zur Abschirmung zumindest teilweise mechanisch und/oder mit einem Schaltmechanismus. Die Verwendung eines lokal vorhandenen Schaltmechanismus zur Integration mindestes eines Mittels zur Abschirmung wirkt sich platzsparend und positiv auf die Erfassungssicherheit aus.

Eine vorteilhafte Ausführungsform sieht Mittel zur Abschirmung zur Unterbrechung und Wiederherstellung einer kontaktlosen Energieversorgung über das Koppelelement vor. Die kontaktlose Datenübertragung wird dadurch vermieden, indem das Koppelelement von der Energieversorgung abkoppelbar ist. Dadurch entsteht eine kontaktlose Energieversorgung, die bei Bedarf anwendbar, bzw. unterbrechbar ist. Folglich ist es auch möglich, das Koppelelement ausschließlich kontaktlos, d.h. ohne lokale Energieversorgung zu betreiben, um damit den Verkabelungsaufwand und Designaufwand weiter zu reduzieren. Gleichzeitig ist durch die kontaktlose Energieversorgung eine Kontrolle derselben mittels der Mittel zur Abschirmung möglich.

Vorteilhafterweise weisen die Mittel zur Abschirmung mindestens eine metallische und/oder metallisierte Komponente auf. Die Verwendung von Metallen in diesem Zusammenhang wird in der Fähigkeit zur Abschirmung von Radiowellen gesehen. Gleichzeitig ist eine derartige metallische oder metallisierte Komponente in einem Schaltmechanismus oder innerhalb des Gerätes oder Elementes verwendbar. Die Komponente ist folglich dafür vorgesehen, mindestens zwei Funktionen übernehmen zu können. Eine vorteilhafte Ausführungsform aktiviert mindestens ein Mittel zur Abschirmung durch eine Änderung des Zustands. Eine Zustandsänderung impliziert automatisch eine Betätigung mindestens eines Mittels zur Abschirmung, wodurch der Zustand des Systems anzeigbar wird.

Bei einer weiteren vorteilhaften Ausführungsform sind die Daten eines Datenspeichers bei einem ersten Zustand kontaktlos auslesbar und bei einem zweiten Zustand nicht kontaktlos auslesbar. Die Daten werden aus dem Datenspeicher entnommen und sind in Abhängigkeit des Zustandes durch das Lesegerät über das Koppelelement kontaktlos auslesbar oder nicht. Bei der Existenz zweier Zustände ist die Übertragung der Daten der Nachweis für einen ersten Zustand und die Nichtübertragung der Daten der Nachweis für den zweiten Zustand. Des Weiteren ist es sinnvoll, die Daten zur Identifikation einer Einheit vorzusehen. Somit sind bei Empfang von Daten, die zur Identifikation vorgesehen sind, eindeutig die Einheit und deren Zustand bekannt.

Vorteilhafterweise ist das Lesegerät als integriertes oder als mobiles Lesegerät vorgesehen. Ein integriertes Lesegerät hat demzufolge eine Überwachungsaufgabe, wobei ein mobiles Lesegerät eine Aufgabe aufweist, die einem Ablesen oder Überprüfen ähnelt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

Es zeigen:
- FIG 1: eine Seitenansicht eines Schutzschalters eines ersten Ausführungsbeispiels in einem ersten Schaltzustand,
- FIG 2: die Vorderansicht des Schutzschalters des ersten Ausführungsbeispiels im ersten Schaltzustand,
- FIG 3: die Seitenansicht des Schutzschalters des ersten Ausführungsbeispiels in einem zweiten Schaltzustand,
- FIG 4: zeigt die Vorderansicht des Schutzschalters des ersten Ausführungsbeispiels in dem zweiten Schaltzustand,
- FIG 5: einen Schaltschrank des ersten Ausführungsbeispiels mit Bediener,
- FIG 6: eine Abbildung einer gefahrenbehafteten Maschine mit geschlossener Abdeckung eines zweiten Ausführungsbeispiels,

- FIG 7: eine Abbildung der gefahrenbehafteten Maschine mit geöffneter Abdeckung des zweiten Ausführungsbeispiels,
- FIG 8: eine Ansicht eines Scharnierschalters eines dritten Ausführungsbeispiels,
- FIG 9: eine Ansicht eines Positionsschalters eines vierten Ausführungsbeispiels und
- FIG 10: eine Darstellung einer Alarmanlage eines fünften Ausführungsbeispiels.

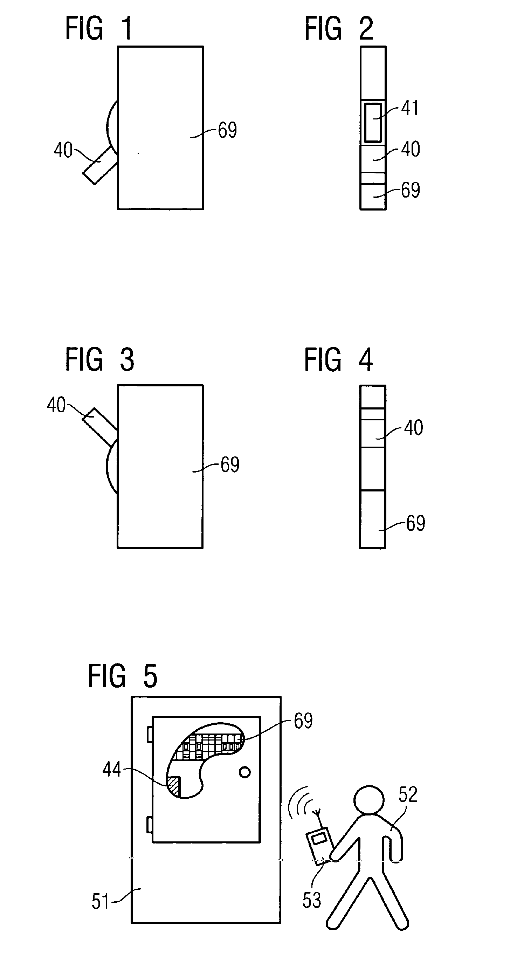

FIG 1 zeigt eine Seitenansicht eines Schutzschalters eines ersten Ausführungsbeispiels in einem ersten Schaltzustand. Wird der Schutzschalter 69 ausgelegt oder löst er aus, wird der Radiofrequenzidentifikator 41 (des Weiteren RFID genant) freigelegt und ist durch ein Lesegerät 44,53, wie z.B. in Figur 5, erfassbar. Im gezeigten ersten Schaltzustand ist eine kontaktlose Datenübertragung nicht möglich.

FIG 2 zeigt eine Vorderansicht des Schutzschalters 69 des ersten Ausführungsbeispiels im ersten Schaltzustand. Im ersten Schaltzustand ist der RFID 41 freigelegt, und die kontaktlose Datenübertragung kann aufgrund der deaktivierten Abschirmung stattfinden.

Bei dem Schutzschalter 69 des ersten Ausführungsbeispiels erübrigt sich der Einsatz eines Hilfsschalters, der drähtig verbunden werden müsste und des Weiteren an einem Feldbus anschließbar sein müsste. Die Schaltzustandserkennung wird folglich mittels der im Schutzschalter 69 integrierten Mittel zur Abschirmung und den im System vorhandenen Erfassungsmitteln bewerkstelligt. Des Weiteren ist das Lesegerät 44,53 aufgrund der flexiblen Platzierbarkeit mit einem Feldbus verbindbar.

FIG 3 zeigt eine Seitenansicht des Schutzschalters 69 des ersten Ausführungsbeispiels in einem zweiten Schaltzustand. Der gezeigte Schutzschalter 69 weist einen Betätiger 40 auf, der einerseits Teil des Schaltmechanismus des Schutzschalters 69 ist, und andererseits zu den Mitteln zur Abschirmung gehört. Die Abbildung zeigt den Schutzschalter 69 im zweiten Schaltzustand, in dem das Koppelelement des RFID 41 durch den Betätiger 40 abgeschirmt ist. Gleichzeitig schirmt der Betätiger 40 den RFID 41 auch visuell ab. Die Abschirmung der für die kontaktlose Datenübertragung notwendigen Radiowellen kann in diesem Beispiel durch eine Metallisierung oder teilweise Metallisierung des Betätigers 40 bewerkstelligt werden. Hierbei kann ein Kompromiss dahingehend geschlossen werden, dass der einfach zu verarbeitende und preiswerte Kunststoff als auch metallische Elemente im Betätiger 40 verarbeitet sind. Besonders vorteilhaft wirkt sich die Kombination der Funktionen des Betätigers 40 aus, wobei durch die Position des Betätigers 40 visuell als auch kontaktlos der Zustand des Schutzschalters 69, also der Schaltzustand, anzeigbar ist. Es spielt eine untergeordnete Rolle, ob der Betätiger 40 manuell, oder aufgrund eines Schaltmechanismus bzw. einer Schaltautomatik ausgelöst wurde.

Der RFID 41 ist dafür vorgesehen, einen bestimmten Code oder Kennzeichen, das den Schutzschalter 69 identifiziert abzusetzen. Folglich ist der Schutzschalter 69 in einer Vielzahl, beispielsweise in einer Schaltanordnung oder in einem Schaltschrank 51 (siehe Figur 5), verwendbar.

Des Weiteren ist das Gehäuse des Schutzschalters 69 ebenfalls zur Abschirmung vorgesehen. Es gehört folglich zu den Mitteln der Abschirmung, die nicht betätigt werden können. Auch in diesem Fall bietet sich ein metallisiertes Gehäuse an.

FIG 4 zeigt eine Vorderansicht des Schutzschalters 69 des ersten Ausführungsbeispiels im zweiten Schaltzustand. Der RFID 41 wird durch den Betätiger 40 vollständig abgeschirmt und abgedeckt. Folglich ist der RFID 41 in dieser Figur nicht zu sehen.

FIG 5 zeigt einen Schaltschrank 51 des ersten Ausführungsbeispiels mit Bediener 52. Der gezeigte Schaltschrank 51 ist mit einer teilweise geschnittenen Schaltschranktür gezeigt, um die im Inneren angebrachten Komponenten zu zeigen. Im Innern des Schaltschranks 51 sind Schutzschalter 69, gemäß den Figuren 1 bis 4, angeordnet. Zusätzlich befindet sich innerhalb des Schaltschranks 51 ein Lesegerät 44, welches zur lokalen Auslesung bzw. Erfassung der Schaltzustände der einzelnen Schutzschalter 69 vorgesehen ist. Das Lesegerät 44 kann dazu vorgesehen sein eine Meldung an eine Zentrale abzusetzen oder Sicherheitsmaßnahmen einzuleiten, falls ein bedenklicher Schaltzustand eines oder mehrerer Schutzschalter 69 (Kombinationen von Schaltzuständen einzelner Schutzschalter 69) erfasst wird. Des Weiteren ist durch den Schutzschalter 69 spezifischen Code eine Erkennung des jeweiligen Schutzschalters 69 möglich. Maßnahmen können folglich auch in Abhängigkeit der Identität des Schutzschalters 69 eingeleitet werden.

Der Schaltschrank 51 kann zur Abschirmung der Radiowellen des Lesegeräts 44 und/oder der Schutzschalter 69 vorgesehen sein. Dies ist dann sinnvoll, wenn die Informationen über Schaltzustände der Schutzschalter 69 nicht nach außen transparent sein sollen. Damit ist mittels eines einfaches mechanischen Schlosses am Schaltschrank 51 gewährleistet, dass kein Unbefugter die Schaltzustände erfahren kann.

Des Weiteren ist der Schaltschrank 51 derartig ausführbar, dass die Schaltzustände von außen erfassbar sind. In diesem Fall erleichtert sich die Zustandserfassung von außen beispielsweise mittels eines mobilen Lesegerätes 53 eines Bedieners 52. Diese Methode ist insbesondere dann von Vorteil, wenn der Schaltschrank 51 an einer unzugänglichen Stelle platziert ist, oder der Zugang zum Schaltschrank 51 besondere Gefahren für den Bediener 52 beinhalten würde. Des Weiteren ist es auch denkbar, dass bei einer visuellen Schaltzustandserfassung der Bediener 52 in den Gefahrenbereich einer Maschine, wie z. B. einer Produktionsanlage, geraten würde, die während der Ablesung der Schaltzustände heruntergefahren werden müsste. Folglich führt die visuelle Ablesung in jedem Fall zu zeitaufwendigen Handlungen, die mittels des Einsatzes des mobilen Lesegerätes 53 vermeidbar sind.

Da der Schutzschalter 69, wie bereits dargestellt, keine Hilfsschalter erfordert und außerdem platzsparend ausgelegt ist, ist es möglich, den Schaltschrank 51 hinsichtlich seiner Dimensionen bzw. seines Umfangs zu optimieren. Schaltschränke sind daher in kleinen Formaten ausführbar und somit flexibler einsetzbar. Auch der Verkabelungsaufwand innerhalb des Schaltschrankes ist durch den Einsatz der kontaktlosen Zustandserfassung erheblich reduziert.

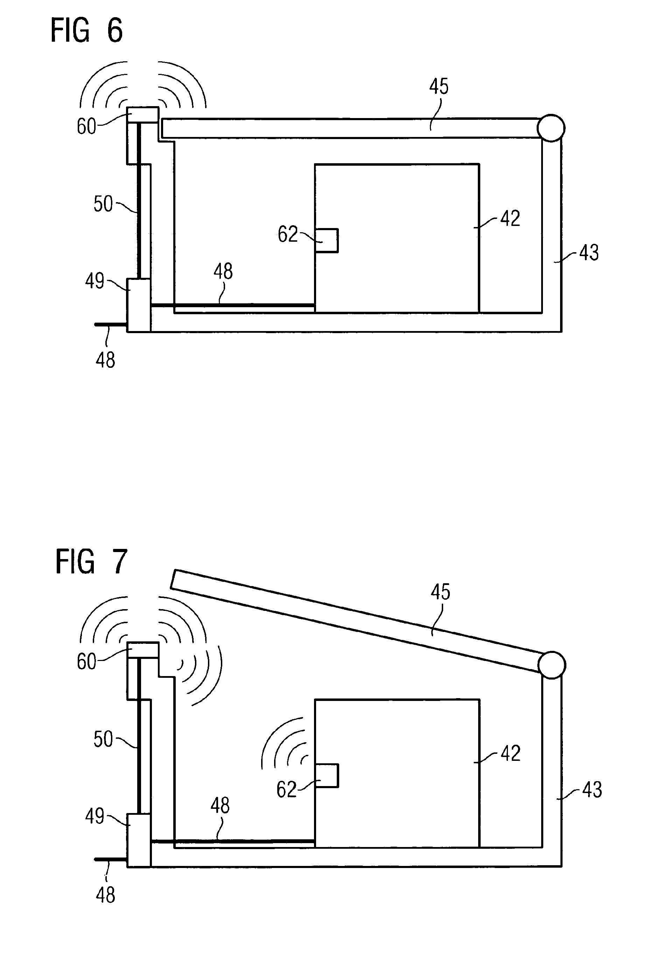

FIG 6 zeigt eine Abbildung einer gefahrenbehafteten Maschine 42, mit geschlossener Abdeckung eines zweiten Ausführungsbeispiels. Die gefahrenbehaftete Maschine 42 befindet sich in einem Sicherheitsbehälter 43, der mit einem beweglichen Deckel 45 verschließbar ist. Der Sicherheitsbehälter 43 weist des Weiteren in der Nähe der Deckelöffnung ein Lesegerät 44 auf, welches über eine Steuerleitung 50 mit einem Schutzschalter 49 verbunden ist. Der Schutzschalter 49 weist Mittel auf, die Stromversorgung der gefahrenbehafteten Maschine 42 zu kontrollieren. In diesem Ausführungsbeispiel stellen der Sicherheitsbehälter 43 und dessen Deckel 45 Mittel zur Abschirmung des RFID's 62 der gefahrenbehafteten Maschine 42 dar. Im geschlossenen Zustand ist das Lesegerät 44 nicht in der Lage, eine kontaktlose Datenübertragung mit dem RFID 62 herzustellen. Ist der Deckel 45 geschlossen, entspricht der Zustand der gesamten Anordnung dem ersten Zustand des Systems.

Als gefahrenbehaftete Maschine 42 sind eine ganze Reihe von Maschinen, wie z. B. eine Kreissäge, eine Laserbeschriftungsanlage oder ein Röntgengerät denkbar.

Vorteilhafterweise ist der RFID 62 stets in Verbindung mit der gefahrenbehafteten Maschine 42 verwendbar, auch wenn diese beispielsweise in einem anderen Sicherheitsbehälter eingesetzt wird. Durch einfaches Entnehmen und Wiedereinsetzen ohne weiteren Verkabelungsaufwand ist somit der Einsatz an einer anderen Örtlichkeit gegeben. Mit dem gleichen RFID 62 ist deshalb auch ein Tracking der Maschine 42 innerhalb eines Betriebes möglich. Eventuell ist der RFID 62 bereits standardmäßig mit der gefahrenbehafteten Maschine 42 verbunden.

FIG 7 zeigt eine Abbildung der gefahrenbehafteten Maschine 42 mit offener Abdeckung des zweiten Ausführungsbeispiels. Mit der Öffnung des Deckels 45 ist die Abschirmung der gefahrenbehafteten Maschine 42 nicht mehr gewährleistet. Die kontaktlose Datenübertragung vom RFID 62 zum Lesegerät 44 findet statt, und indiziert den neuen Zustand. Der RFID 62 sendet den Code der gefahrenbehafteten Maschine 42 an das Lesegerät 44, wodurch erkannt werden kann, dass die gefahrenbehaftete Maschine 42 nun von außen zugänglich ist. Das Lesegerät 44 ist in diesem Ausführungsbeispiel dazu vorgesehen, über die Steuerleitung 50 ein entsprechendes Signal an den Schutzschalter 49 zu senden. Der Schutzschalter 49 unterbricht die Stromzufuhr der gefahrenbehafteten Maschine 42 und schließt somit die Verletzungsgefahr eines Bedieners 52 aus.

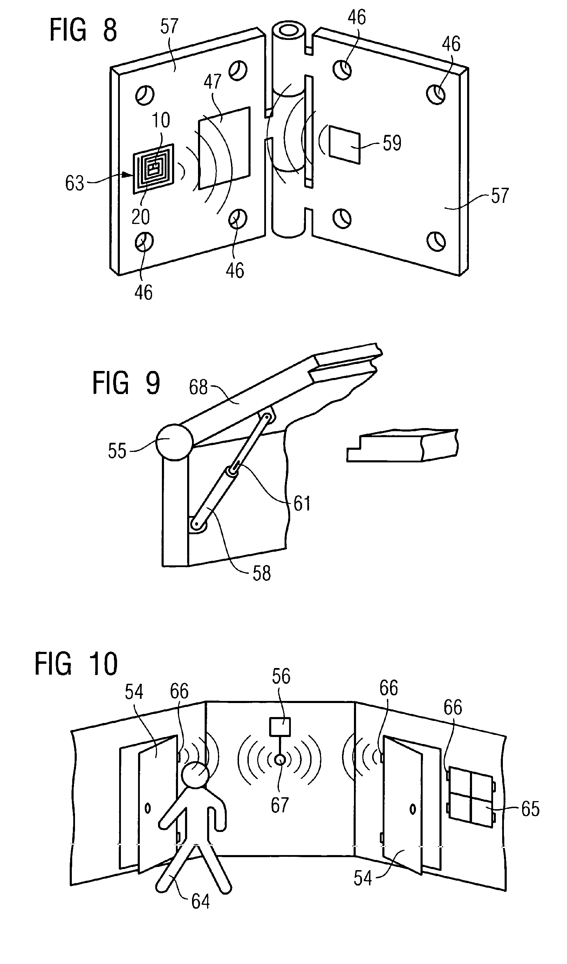

FIG 8 zeigt eine Ansicht eines Scharnierschalters eines dritten Ausführungsbeispiels. Der Scharnierschalter weist in seinem linken Scharnierflügel 57 einen RFID 63 auf, der mit einem integrierten Datenspeicher 10 und dem Koppelelement 20 gezeigt ist. Der rechte Scharnierflügel 57 ist zur Aufnahme des Lesegerätes 44 vorgesehen, wobei auch eine teilweise Aufnahme des Lesegerätes 44 denkbar ist, wenn beispielsweise aus Platzgründen nur eine Sendeeinheit des Lesegerätes 44 platziert werden kann. Der gezeigte Schaltzustand entspricht dem ersten Zustand, bei dem die Daten aus dem Datenspeicher 10 über das Koppelelement 20 durch das Lesegerät 44 auslesbar sind. Der Scharnierschalter fungiert folglich als Positionsschalter, der zwei mögliche Zustände aufweist. Findet eine Betätigung des Scharnierschalters in der Art statt, dass die beiden Scharnierflügel 47 aufeinander gelegt werden, so wird eine Abschirmung sowohl des Lesegerätes 44 als auch des RFID's 63 erreicht. Im geschlossenen Zustand ist der Scharnierschalter im zweiten Schaltzustand. Durch eine entsprechende Ausbildung des Scharniers, bzw. der Scharnierflügel 57 ist eine jeweilige Abschirmung des Lesegeräts 44 oder des RFID's 63, oder beider Komponenten gleichzeitig möglich. So ist es beispielsweise auch möglich, anstatt die Scharnierflügel 57 als Abschirmung vorzusehen, ein Abschirmelement 47 entsprechend einzusetzen. Wie in FIG 8 gezeigt liegt das Abschirmelement 47 auf dem linken Scharnierflügel 57 dem Lesegerät 44 gegenüber. In geschlossenem Zustand ist somit das Lesegerät vom RFID 63 abschirmbar. In diesem Fall ist der RFID 63 ebenfalls nicht aktiv, da dieser nicht mit Energie versorgt wird. Wahlweise ist auch eine Abschirmung des RFID 63 mit einer entsprechenden Anbringung eines Abschirmelementes 47 möglich. Bei der Verwendung des Abschirmelementes 47 ist man frei in der Wahl des Materials für den Scharnierschalter, da die Scharnierflügel nicht zum Abschirmen verwendet werden müssen.

FIG 9 zeigt eine Ansicht eines Positionsschalters eines vierten Ausführungsbeispiels. Der gezeigte Positionsschalter ist mit einem pneumatisch unterstützten Scharnier 55 ausgestattet. Des Weiteren ist der Positionsschalter zur Zustandsanzeige der Tür 68 vorgesehen. Die Zustände "Tür-offen" und "Tür-geschlossen" entsprechen dem jeweils ersten und zweiten Zustand des Systems. Der RFID 61 ist derartig angeordnet, dass dieser in die Pneumatik integriert ist. Im ersten Zustand ist eine kontaktlose Datenübertragung zu einem Lesegerät möglich. Dies zeigt an, dass die Tür 68 offen ist. Im zweiten Zustand ist eine pneumatische Stange 70, auf der der RFID 61 angeordnet ist, innerhalb des Abschirmelements 58 gelagert. Dieses Ausführungsbeispiel zeigt, dass nicht nur die Mittel zur Abschirmung betätigbar oder bewegbar sein müssen, sondern es ist ebenfalls möglich, durch eine Bewegung des RFID 61 eine Abschirmung herbeizuführen.

FIG 10 zeigt eine Darstellung einer Alarmanlage eines fünften Ausführungsbeispiels. Die Darstellung zeigt einen Raum, in dem sich der Bediener 64 befindet. Beide Türen 54 besitzen einen RFID-Positions- bzw. Scharnierschalter 66, wie sie in den Ausführungsbeispielen 3 und 4 beschrieben sind. Des Weiteren besitzt das Fenster 65 einen derartigen Scharnierschalter 66. Eine kontaktlose Datenübertragung von den jeweiligen Scharnierschaltern 66 findet dann statt, wenn eine Tür 54 bzw. das Fenster 65 geöffnet wird. Wie in der Figur gezeigt, besteht eine kontaktlose Datenübertragung der Scharnierschalter 66 der beiden Türen 54 mit dem Lesegerät 67. Das Fenster 65 ist geschlossen, wodurch der RFID des Scharnierschalters 66 abgeschirmt und eine Datenübertragung nicht möglich ist. Das Lesegerät 67 ist zentral im Raum angebracht und mit einem Signalgeber 56 verbunden. Die Alarmanlage kann derartig ausgelegt sein, dass ein akustisches und/oder optisches Signal durch den Signalgeber 56 aktiviert wird und/oder eine Meldung an eine Zentrale abgegeben wird, wenn kontaktlose Datenübertragungen mit einem oder mehreren Scharnierschaltern 66 stattfinden.

Zusätzlich ist das System auch als Sicherheitsschleuse ausführbar. In diesem Fall wird eine Meldung, bzw. eine Sicherheitsmaßnahme eingeleitet, wenn mindestens zwei Kennungen/Codes von den Scharnierschalter 66 auslesbar sind. Dies bedeutet, dass nur bei bestimmten Gesamtzuständen der Anlage auslöst wird. Beispielsweise ist es denkbar, dass der Raum eine Schleuse darstellen soll, bei der immer mindestens eine der beiden Türen 54 geschlossen sein muss. Solch eine Maßnahme ist beispielsweise bei Reinräumen und auch bei Sicherheitsräumen für den Strafvollzug sinnvoll. Eine Überwachung hinsichtlich der Zustände der Schleuse kann mittels der gezeigten Anlage bewerkstelligt werden. Demnach löst das Lesegerät 67 nur dann Alarm aus, wenn eine kontaktlose Datenübertragung von den Scharnierschaltern 66 der beiden Türen 54 vorliegt.

Zusammenfassend betrifft die Erfindung ein System zur kontaktlosen Zustandserkennung mit mindestens zwei Zuständen und Erkennungsmitteln und Mitteln zur Abschirmung, wobei die Mittel zur Abschirmung zur Unterbrechung und Wiederherstellung einer Datenübertragung von einem Koppelelement zu einem Lesegerät vorgesehen sind. Damit soll erreicht werden, dass eine sichere und kosteneffiziente Zustandserkennung des Systems bewerkstelligt werden kann. Das erfindungsgemäße System ist zumindest teilweise als Schaltungsanordnung, Sicherheitssystem, Positionsschalter, Scharnierschalter oder als Alarmanlage ausführbar.

## Patentansprüche

1. System zur kontaktlosen Zustandserkennung mit mindestens zwei Zuständen und Erkennungsmitteln, wobei die Erkennungsmittel mindestens ein Lesegerät (44, 53, 59, 60, 67), und mindestens ein Koppelelement (20), die zur kontaktlosen Datenübertragung über eine Übertragungsfrequenz vorgesehen sind, aufweisen, **dadurch gekennzeichnet, dass** das System Mittel zur Abschirmung (40, 43, 45, 47, 57) aufweist, wobei die Mittel zur Abschirmung (40, 43, 45, 47, 57) zur Unterbrechung und Wiederherstellung einer Datenübertragung vom Koppelelement (20) zum Lesegerät (44, 53, 59, 60, 67) vorgesehen sind.

2. System nach Anspruch 1, wobei das Lesegerät (44, 53, 59, 60, 67) und/oder das Koppelelement (20) zur Abschirmung vorgesehen sind.

3. System nach einem der Ansprüche 1 oder 2, wobei mittels der Anwendung mindestens eines Mittels zur Abschirmung ein Zustand des Systems anzeigbar ist.

4. System nach einem der Ansprüche 1 bis 3, wobei die Mittel zur Abschirmung (40, 43, 45, 47, 57) zur Unterbrechung und Wiederherstellung einer kontaktlosen Energieversorgung über das Koppelelement (20) vorgesehen sind.

5. System nach einem der Ansprüche 1 bis 4, wobei die Mittel zur Abschirmung (40, 43, 45, 47, 57) zumindest teilweise mechanisch und/oder mit einem Schaltmechanismus gekoppelt sind.

6. System nach einem der Ansprüche 1 bis 5, wobei die Mittel zur Abschirmung (40, 43, 45, 47, 57) mindestens eine metallische oder metallisierte Komponente aufweisen.

7. System nach einem der Ansprüche 1 bis 6, wobei mindestens ein Mittel zur Abschirmung (40, 43, 45, 47, 57) durch eine Änderung des Zustands des Systems aktivierbar ist.

8. System nach einem der Ansprüche 1 bis 7, wobei bei einem ersten Zustand die Daten eines Datenspeichers (10) kontaktlos auslesbar sind und bei einem zweiten Zustand nicht kontaktlos auslesbar sind.

9. System nach einem der Ansprüche 1 bis 8, wobei die Daten des Datenspeichers (10) zur Identifikation einer Einheit vorgesehen sind.

10. System nach einem der Ansprüche 1 bis 9, wobei das Lesegerät (44, 59, 60, 67) als integriertes oder als mobiles Lesegerät (53) vorgesehen ist.

11. System nach einem der Ansprüche 1 bis 10, wobei die Erkennungsmittel einen Radiofrequenzidentifikator (61, 62, 63) aufweisen.

12. System nach einem der Ansprüche 1 bis 11, insbesondere einer Schaltungsanordnung, mit mindestens einer Schalteinheit (69), die mindestens zwei Zustände aufweist, wobei die Zustände Schaltzustände sind.

13. Sicherheitssystem nach einem der Ansprüche 1 bis 12, wobei die Schalteinheit mindestens einen Positionsschalter aufweist.

14. Sicherheitssystem nach Anspruch 13, wobei nach Zustandserkennung eine Sicherheitsmaßnahme einleitbar ist und/oder eine Meldung absetzbar ist.

15. Verfahren zur kontaktlosen Zustandserkennung mit mindestens zwei Zuständen, wobei mindestens ein Lesegerät (44, 53, 59, 60, 67) und mindestens ein Koppelelement (20) kontaktlos Daten über eine Übertragungsfrequenz übertragen,
**dadurch gekennzeichnet, dass** durch Mittel zur Abschirmung (40, 43, 45, 47, 57) die Datenübertragung vom Koppelelement (20) zum Lesegerät (44, 53, 59, 60, 67) unterbrochen und wiederhergestellt wird.

16. Verfahren nach Anspruch 15, wobei durch die Anwendung mindestens eines Mittels zur Abschirmung (40, 43, 45, 47, 57) der Zustand des Systems angezeigt wird.

17. Verfahren nach einem der Ansprüche 15 oder 16, wobei die Mittel zur Abschirmung (40, 43, 45, 47, 57) eine kontaktlose Energieversorgung über das Koppelelement (20) unterbrechen und wiederherstellen.

18. Verfahren nach einem der Ansprüche 15 bis 17, wobei mindestens ein Mittel zur Abschirmung (40, 43, 45, 47, 57) durch eine Änderung des Zustandes des Systems aktiviert wird.

19. Verfahren nach einem der Ansprüche 15 bis 18, wobei bei einem ersten Zustand die Daten eines Datenspeichers (10) kontaktlos ausgelesen werden und bei einem zweiten Zustand nicht kontaktlos ausgelesen werden.

20. Verfahren nach einem der Ansprüche 15 bis 19, wobei die Daten des Datenspeichers (10) eine Einheit identifizieren.
